# EUROPEAN PATENT SPECIFICATION

(11) **EP 2 690 080 B1**
(45) Date of publication and mention of the grant of the patent: **26.02.2020**
(21) Application number: 12382306.4
(22) Date of filing: 27.07.2012
(51) Int. Cl.: C05F 11/02, C05F 11/10, C05G 3/00

(54) **Fertilisers enriched with a humic-enzimatic solution rich in phosphatase enzymes and their manufacturing process**
Mit einer humushaltigen-enzymatischen, phosphataseenzymreichen Lösung angereicherte Düngemittel und Herstellungsverfahren dafür
Engrais enrichi avec une solution humique-enzymatique riche en enzymes phosphatase et leur procédé de fabrication

(43) Date of publication of application: 29.01.2014
(73) Proprietor: Fertiberia, S.A., 28046 Madrid (ES)
(72) Inventor: García Izquierdo, Carlos, 30100 Murcia (ES); Brañas Lasala, Javier, 28046 Madrid (ES); Del Campo Novales, Pablo, 28046 Madrid (ES); Hernández Fernández, María Teresa, 30100 Murcia (ES)
(74) Representative: Elzaburu S.L.P.

(56) References cited:
- FR-A1- 2 234 245
- FR-A1- 2 383 146
- US-A1- 2009 162 923
- DATABASE WPI Week 201124 Thomson Scientific, London, GB; AN 2011-A43619 XP002686794, & CN 101 905 981 A (MA W) 8 December 2010 (2010-12-08)
- DATABASE WPI Week 200122 Thomson Scientific, London, GB; AN 2001-211975 XP002686795, & CN 1 276 361 A (ZHONGHEDA AGRIC NEW & HIGH TECH DEV CO) 13 December 2000 (2000-12-13)
- PILAR MARIA C; ORTEGA NATIVIDAD; PEREZ-MATEOS MANUEL; BUSTO MARIA D: "Kinetic behaviour and stability of Escherichia coli ATCC27257 alkaline phosphatase immobilised in soil humates", JOURNAL OF THE SCIENCE OF FOOD AND AGRICULTURE, vol. 83, 8 January 2003 (2003-01-08), pages 232-239, XP009502419, DOI: 10.1002/jsfa.1301
- BURNS R G AND LADD J M: "Stability of immobilised phosphatases in soil", SOCIETY FOR GENERAL MICROBIOLOGY. QUARTERLY,, vol. 12, 1 January 1985 (1985-01-01), page 17?, XP009502417, ISSN: 0142-7547
- MARÍA C. PILAR-IZQUIERDO ET AL: "Barley seed coating with free and immobilized alkaline phosphatase to improve P uptake and plant growth", JOURNAL OF AGRICULTURAL SCIENCE., vol. 150, no. 06, 1 December 2012 (2012-12-01), pages 691-701, XP055551980, GB ISSN: 0021-8596, DOI: 10.1017/S0021859612000019
- MARÍA CONCEPCIÓN PILAR-IZQUIERDO ET AL: "Barley Seeds Encapsulated in Calcium-Alginate Gels with Phosphatase and Humate-Phosphatase Complexes for Improving Phosphorus Bioavailability", AGRONOMY JOURNAL, vol. 105, no. 6, 1 January 2013 (2013-01-01), page 1565, XP055550709, US ISSN: 0002-1962, DOI: 10.2134/agronj2013.0010

## Description

### FIELD OF INVENTION

This invention is included within the field of mineral, organic or organo-mineral fertilisers, albeit nitrogenated or phosphated, NP compound fertilisers, PK compound fertilisers or NPK compound fertilisers enriched with humic-enzymatic complexes, rich in immobile phosphates which, in addition to providing nutrients for a plant, transform organic phosphorous in the soil into inorganic phosphorous available for plants. It also describes the manufacturing process of the aforementioned fertilisers.

### BACKGROUND TO THE INVENTION

In the majority of soils, inorganic phosphorous, which is added as a fertiliser, is rapidly rendered unusable by plants due to insolubilisation and /or immobilisation processes. However, in these soils a considerable part of the total phosphorous is organic and may be hydrolysed by the action of phosphomonoesterases to form inorganic phosphorous which plants can use.

Phosphatases are adaptive enzymes (phosphomonoesterases of the hydrolase group) the activity of which is increased when plants are deficient in phosphorous. As a result, an increase in phosphatase activity may reflect a high demand for phosphorous by the plant.

In the prior art, some attempts are referred to which were aimed at obtaining an increase in the availability of inorganic phosphorus or other essential nutrients for plants. Thus for example, the document US 2011/0209510 A1 describes fertilisers which induce increased enzymatic activities in the soil, including phosphatase. However, the fertiliser does not contain added phosphatase but what it does is cause an increase in enzymes which are already present in the soil by adding a group of salts and organic and inorganic elements to the soil.

The document US 2009/0162923 A1 also discloses the addition of enzymes (including among a number of others, phosphatase) to a compost which, through a digestion process, obtains mineral nutrients from the compost which are useful for the plant.

The document FR 2234245 A1 discloses a humic fertiliser containing alkaline humates, humic phosphates and humic-metallic complexes. The addition of a catalyser, among which are humic acids or microelements, during the process of obtention increases the rate of development of microorganisms and the *in situ* formation of enzymes.

The document FR 2383146 A1 discloses a process for obtaining humic fertilisers by reacting a humic acid containing substance with an alkaline substance in the presence of manure which acts as a bio catalyser. The presence of the manure increases the production of microorganisms and of enzymes *in situ.*

Pilar MC et al. studied the kinetic behaviour and stability of an alkaline phosphatase which had been immobilised by formation of phosphatase humic acid complexes and disclose that the stability of the alkaline phosphatase was enhanced by complexation to the soil humates (Pilar MC et al. 2003. J Sci Food Agric 83:232-239).

Burns RG and Ladd JN disclose that polyphenolic-phosphatase complexes were prepared as analogues of naturally occuring humicenzyme complexes and that, when added to soil, the immobilized enzymes were remarkably stable (Burns RG and Ladd JN, Microbiology Quarterly, vol. 12, 1 January 1985).

Pilar-Izquierdo MC et al. also disclosed the use of humic alkaline phosphatase complexes in seed coating to improve P uptake and plant growth (Pilar-Izquierdo MC et al. J Agric Sci (2012), 150, 691-701).

Furthermore, the document US2003/0145639 A1 describes a manufacturing process of a fertiliser based on compost, a process by which a magnesium rich compound is added to compost along with specific enzymes, such as phosphatase and urease in order to increase production of ammonium-magnesium phosphate.

Finally, document FR 2396 730 describes an agricultural fertiliser designed for fertilising soils to which a mixture of insoluble phosphates may be optionally added, along with enzymatic products rich in phosphatases and other fertilising products such as oligoelements potassium, magnesium and calcium.

However, even the closest documents in the prior art do not address the problem that since phosphatases are added freely to the fertiliser, they are exposed to a more or less rapid degradation or denaturalisation, so that in effect, the addition of the phosphatase to soil is limited over time.

### SUMMARY DESCRIPTION OF THE INVENTION

Therefore, the purpose of this invention is to provide a fertiliser which, in addition to providing nutrients for the plant, provides humic complexes of phosphatase enzymes which are less likely to denaturalise than those described in the previous art, and therefore they are able to exhibit their beneficial effect in the soil, by increasing availability of inorganic phosphorous to the plants, in a more prolonged manner over time than was possible in the previous state of the art.

The solution is based on the fact that inventors have identified that by applying a mineral, organic or organo-mineral fertiliser, albeit phosphated or nitrogenated, a humic-enzymatic solution rich in phosphatase enzymes, the resulting fertiliser will be enriched with enzymatic complexes mainly containing phosphatase enzymes in which the phosphatases are substantially immobilised by the humic substances, as a result of which, the phosphatases of said fertiliser have less tendency to degrade, permitting greater transformation of the organic phosphorous from the soil into inorganic phosphorous available to the plant, and in addition this effect is deployed over a longer period.

As a result, in a first aspect of the invention, reference is made to a fertiliser characterised in that it comprises a mineral, organic or organomineral fertiliser, which has integrated in it or is coated by at least one humic-enzymatic complexe wherein the enzymes are mainly phosphatases which are substantially immobilised to the humic substances of the complex, wherein the proportion of said complexes in the fertiliser fanges between 0,01 and 5 weight %.

A second aspect of the invention refers to a process for manufacture of a mineral, organic or organomineral fertiliser which includes pulverising said complex on the mineral , organic or organomineral fertiliser at a point situated between the mix of raw materials and the final point in the production line such as prior to the cooler or the coating outlet. As an alternative to coating it, the humic -enzymatic complexes may also be integrated in the fertiliser by means of a granulation process mixing together with the raw materials of the fertilisers.

The enzymes added to the fertiliser contribute to the mineralization of organic phosphorous in the soil transforming it into phosphorous available to plants. These phosphatase enzymes are substantially immobilised in humic substances such that they are immobilised by them as a result of the extraction or immobilisation process. Thus, the enzyme obtained is immobilised and has increased protection against inhospitable environments, and its tendency to denaturalisation is reduced. The efficiency of the product is observed through a series of factors which are described below and which entail additional advantages:
- the functional capacity in the soil of the enzyme applied with the fertiliser has been observed, in a process by which phosphorous is hydrolysed from organic to inorganic phosphorous available to plants;
- Due to its enzymatic nature it may stimulate microbial activity of the soil.
- From an environmental point of view its application to the soil is totally innocuous as the product is biodegradable.

### DEFINITIONS

Throughout this descriptive report, "humic-enzymatic complex rich in phosphatases" shall be considered to be an enzymatic complex which contains mainly phosphatase enzymes and humic substances, such as humic acids and/or fulvic acids in which the enzymes are substantially immobilised by complexing with the aforementioned humic and/or fulvic acids. Similarly, "humic-enzymatic solution rich in phosphatases" is considered to be a solution containing one or more complexes of this type.

### BRIEF DESCRIPTION OF THE FIGURES

**Figure 1****:** Example 1: Concentration of phosphorous available (ppm) in the soil at 25 and 45 days from the addition of different treatments to the soil.
**Figure 2****:** Example 1: Variation of the percentage of phosphorous available with respect to phosphorous available in the fertiliser (NK)
**Figure 3****:** Example 2: Development of the content of available phosphorous (ppm) over time (days) in a soil treated with SEF fertiliser at a commercial dose.
**Figure 4****:** Example 2: Development over time of the phosphatase alkaline activity (µg *p*NP g⁻¹h⁻¹) in a soil treated with fertiliser at a commercial dose.
**Figure 5****:** Example 3: Available phosphorous (ppm) (extractable through the Olsen method) in soil after 2 months of barley growth
**Figure 6****:** Example 3: Variation of inorganic phosphorous in the soil (in percentage) with respect to fertiliser.
**Figure 7****:** Example 3: Phosphorous extracted (mg) per plant
**Figure 8****:** Example 4: Variation of inorganic phosphorous in the soil (in percentage) with respect to fertiliser (NK).
**Figure 9****:** Example 4: Phosphorous extracted per plant (mg) for each treatment

### DETAILED DESCRIPTION OF THE INVENTION

The fertilisers in the invention are part of the scope of a new concept of fertilisation resulting from the incorporation of humic-enzymatic complexes in fertilisers.

Organic phosphorous may be present in the soil in a very variable proportion based on the content of organic material contained therein. Organic phosphorous represents a significant reserve of potentially available phosphorous. It is estimated that an important fraction thereof is associated with fulvic and humic acids.
During the tests carried out, the inventors in this research project have ascertained the most effective proportion of the solution of humic substances and mainly phosphatase enzymes required with respect to the fertiliser. Based on the type of application (transformable organic phosphorous, levels of organic material, application in integrated form or as coating) and humidity conditions of the final product, the proportions will vary between 0.01 and 30 % of organic humic-enzymatic solution rich in phosphatases (hereinafter referred to simply as the solution (or the complex) of phosphatase enzymes provided in the fertilizer, preferably between 0.01 % and 20% although ideally it would be between 0.01% and 5%. In the present invention, the proportion of said complexes in the fertiliser ranges between 0.01 and 5 weight %.

Basic chemical fertilisers used in the preparation of fertilisers in accordance with the invention are preferably selected from the following types:
1. Nitrogenated chemical fertilisers with a theoretical content of N between 10 and 46%
2. NP compound chemical fertilisers with a theoretical content of N between 3 and 30% and P₂O₅ between 5 and 48 %;
3. NPK compound chemical fertilisers with a theoretical content of N between 3 and 30% and P₂O₅ between 5 and 50 % and a theoretical content of K₂O between 5 and 50 %;
4. Phosphated chemical fertilisers with a theoretical content of P₂O₅ between 5 and 48 %
5. NP compound chemical fertilisers with a theoretical content of N between 5 and 48% and P₂O₅ between 5 and 50 %;
6. NK compound chemical fertilisers with a theoretical content of N between 3 and 30% and K₂O between 5 and 50 %;

A second object or aspect of this invention is a process for manufacture of fertilisers adding to them an enzymatic solution of phosphatases which are obtained by mixing raw materials appropriate for the base fertiliser (among others: urea, ammonium sulphate, ammonia, ammonium nitrate, rock phosphate, superphosphates, phosphoric acid, diamonnium phosphate, monoammonium phosphate, potassium chloride, potassium sulphate, sulphuric acid, organic materials, magnesite, microelements) followed by granulation, drying, sieving and coating. In this process, the organic solution of phosphatase enzymes may be pulverised at some point situated between the mix of raw materials and the completion of the production line. For example, the enzymatic solution of phosphatases could be pulverised prior to cooling.

### EXPERIMENTAL EXAMPLES: AGRONOMIC TESTS VALIDATING THE PRODUCT

The main purpose of this section is to illustrate some examples of agronomic evaluation tests of fertilisers developed in accordance with the invention.

### Example 1: Study of the hydrolytic capacity of the fertilisers used in the soil

The purpose of the test was to assess the transformation of organic phosphorous in the soil by applying a fertiliser with an enzymatic solution of phosphatases in accordance with the invention.

17 mg of the granulated fertiliser treatments were added to Petri dishes which contained 50 g of soil. They were mixed well with the soil and wetted with distilled water. The dishes were covered, wrapped in aluminium foil and left in the laboratory at ambient temperature. After 25 days, the soils were well homogenised and 10 g were taken in order to extract the available P (Olsen method) determining the concentration of P in the extract by means of ICP. The extraction was made in a solid/liquid proportion of 1/10. The remainder of the soil was left on the dish again and the P was extracted after 45 days.

The treatments in triplicate were: control (without fertilisation), NK fertiliser (8-0-6 granulated) and SEF (8-0-6 granulated enriched by 0.5% with the solution of phosphatase enzymes in accordance with the invention).

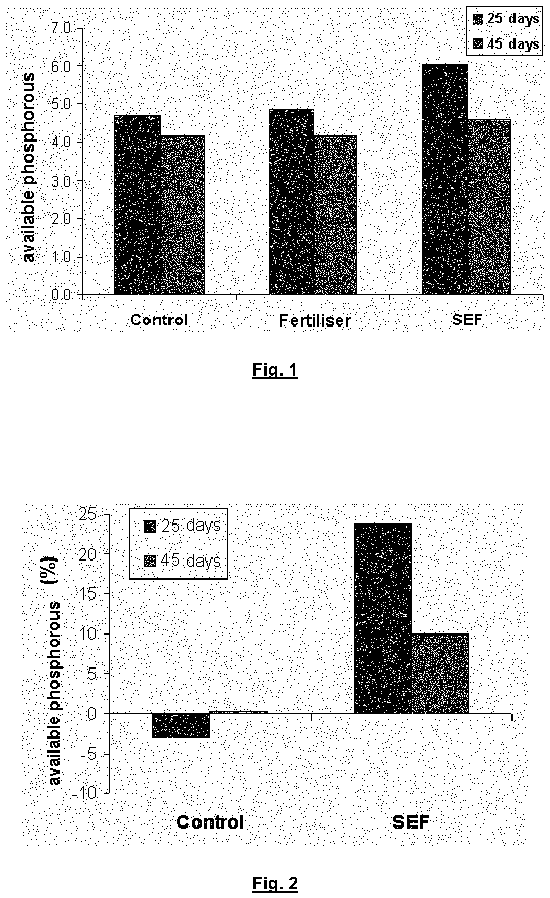

Figure 1 shows the concentrations of available phosphorous detected in the soils at 25 and 45 days from incorporation in the soil of the different treatments. The SEF treatment showed at 25 days from the start of the test, concentrations of inorganic phosphorous (phosphorous available for the plant) greater than those of the control soil and the concentrations of NK fertiliser demonstrating the efficacy of the enzyme solution incorporated by hydrolisation of the organic phosphorous in the soil.

In addition, in soils analysed at 45 days of incorporation of the fertilisers, the SEF treatment showed a phosphorous content greater than those of the control soil or the soil with NK fertiliser.

Figure 2 shows the increase or reduction of inorganic phosphorous in the soil (in percentage) for each treatment with respect to NK. As may be seen in this figure, while in the control treatment the concentration of phosphorous available in the soil was reduced with respect to NK both at 25 and at 45 days, however in the case of the SEF treatment, this concentration increased by 24% to 25 days with respect to the levels of phosphorous available considered in the NK treatment (represented in the abscissa axis). At 45 days the increase considered in the SEF treatment compared to the fertiliser is 10%.

### Example 2: Monitoring over time of available phosphorous and phosphomonoesterase in soil modified with fertiliser

The purpose of this test was to establish the variation over time of the characteristics of the SEF fertiliser which contained a solution of phosphatase enzymes in accordance with the invention (with respect to its phosphatase activity and the amount of available phosphorous released into the soil. This study was carried out with SEF fertiliser and a control treatment (soil without fertiliser). The SEF was added to a soil at the recommended commercial dose for corn crop without phosphorous (1000 kg of 8-0-15 /ha)-

At 3, 10, 20, 45 and 60 days both the concentration of available phosphorous (Olsen phosphorous) and the phosphatase activity in the soil were determined, thus establishing the activity/time curves and the corresponding available phosphorous/time. The treatments were arranged in triplicate and were as follows: control treatment without fertilisation and SEF (NK 8-0-15) enriched with phosphatase enzymes at 0.5% in accordance with the invention.

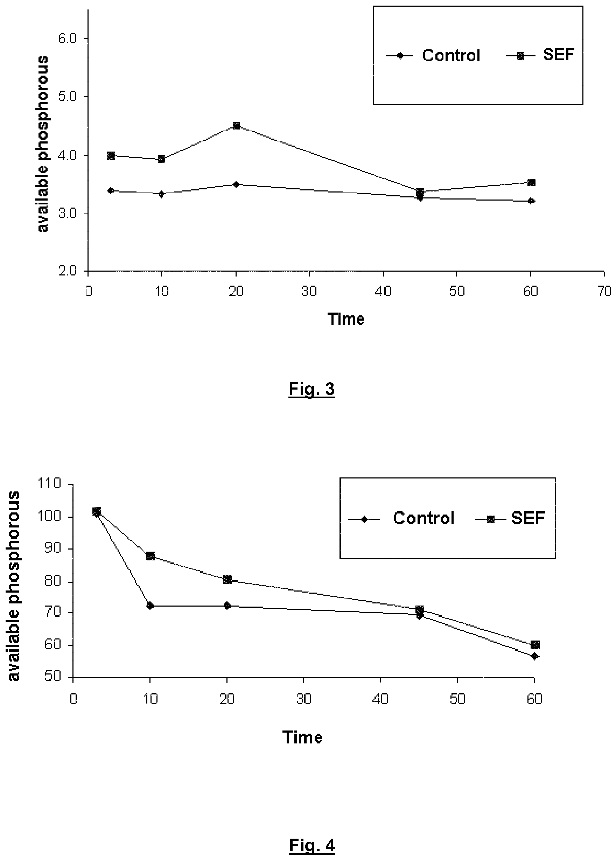

Development over time of the content of available phosphorous in the soils treated and the control are shown in Figure 3 whereas the development of the phosphomonoestarase activity in these soils is shown in Figure 4.

As may be seen in Figure 3, the incorporation in the soil of the SEF fertiliser increases as much the amount of available phosphorous in the soil. With respect to the phosphomonoesterase activity, the treated soil shows slightly higher values than the control at 3 days of incorporation of the granulates (Figure 4)

This data shows that the SEF fertiliser increases the concentration of available phosphorous in the soil by its enzymatic activity.

### Example 3: Test in a climatic chamber of application of barley growth in soil treated with different fertilisers.

To pots containing 900 grams of soil five times as much quantity of different fertilising formulations were added at a dose of 700 kg ha⁻¹ (210 mg 900 g-1 of soil) for barley crop.

The treatments applied were as follows: a control treatment (unfertilised soil) a fertilising treatment (NK) and an SEF treatment with a solution of phosphatase enzymes (the same units of N and K: 8 and 6 respectively, as the fertiliser treatment with solution of phosphatase enzymes in accordance with the invention).

The products were well mixed with the soil and subsequently every pot was wetted and 20 barley seeds were sown, covering seeds with soil from the corresponding treatment. The pots were arranged in a growth chamber in controlled conditions of humidity and ambient temperature, establishing day and night periods. The soils were watered regularly with distilled water. At the end of the test, the plant material was weighed when fresh and dry at 65ºC. The soil samples were sieved, removing any remains of roots, and the inorganic phosphorous content was determined in order to establish the effects of the different treatments on the hydrolysis of organic phosphorous of the soil. The duration of the barley test was 2 months.

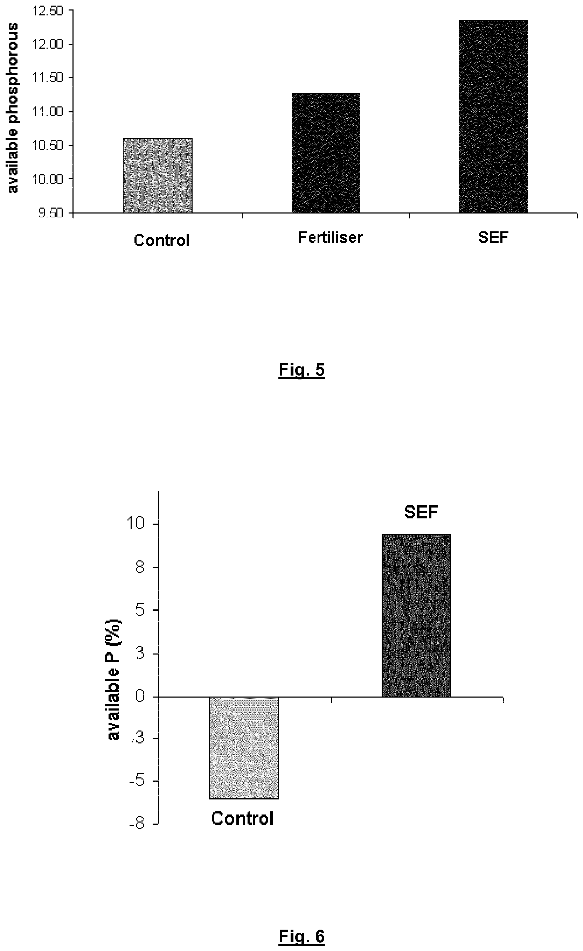

Figure 5 shows the available phosphorous (ppm) in the soil for each treatment. This figure demonstrates how the SEF treatment transforms a greater quantity of organic phosphorous in the soil in a significant manner. Figure 6 shows the increase or reduction of available phosphorous in the soil (in percentage) for each treatment with respect to NK fertiliser. As may be seen from these figures, the SEF treatment obtained over 9% increase in available phosphorous in the soil with respect to fertiliser treatment (represented in the abscissa axis).

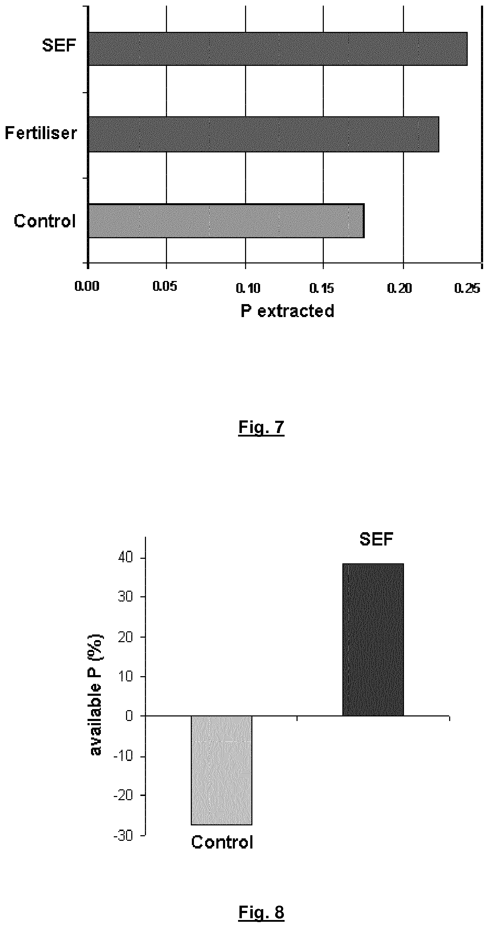

Furthermore, Figure 7 shows the phosphorous extracted per plant for each treatment. As may be seen from this figure, the SEF treatment achieves greater extraction of phosphorous by the plant.

### Example 4: Test in climatic chamber of the application of SEF in corn crop

To pots filled with 2 kg of soil five times the different treatments were applied and 20 corn seeds were sown and cultivated for 1 month. The pots were arranged in a growth chamber in controlled conditions of humidity and ambient temperature, establishing day and night periods. The soils were regularly watered with distilled water.

The treatments applied were as follows: a control treatment (unfertilised soil) a fertilising treatment (NK) and an SEF treatment with a solution of phosphatase enzymes (the same NK with phosphatase enzymes). For corn the dose is usually 1000 kg ha -1 of 8-15-15 therefore, a measurement of 8-0-15 was prepared.

The performance of the aerial part of the plant was determined in fresh and dry weight at 65º along with the extractable phosphorous from the soil.

In determining the phosphorous in the soil (Table 1) it was found that the SEF treatment obtains a greater concentration of available phosphorous in the soil. The increase in phosphorous is due to the phosphatase activity provided in the SEF treatment.

**Table 1. Available phosphorous in soil by the end of the test**

| **Treatments** | **Available phosphorous** |
|---|---|
| Control | 3.17 |
| Fertiliser | 4.36 |
| SEF | 6.04 |

Figure 8 shows the increase or reduction of inorganic phosphorous in the soil (in percentage) for each treatment with respect to (NK) fertiliser. As may be seen from these figures, the SEF treatment obtained an increase in available phosphorous in the soil of up to 40% with respect to fertiliser treatment (represented in the axis).

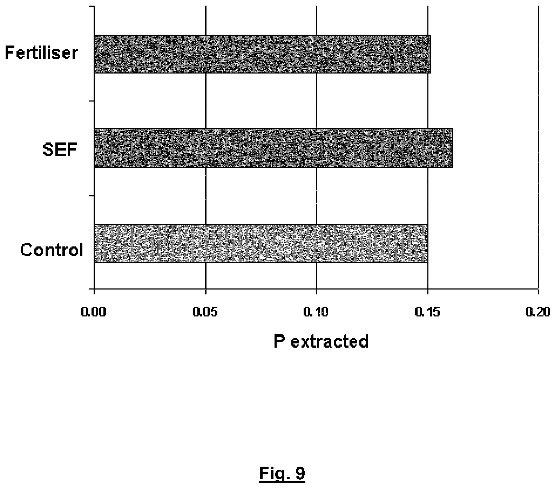

Furthermore, Figure 9 shows the total phosphorous extracted (mg) per plant for each treatment. As may be seen from this figure, the SEF treatment ensures that the plant extracts a greater quantity of phosphorous.

### CONCLUSIONS

From the results obtained the following conclusions were established:
- The fertiliser in accordance with the invention (SEF) produces a transformation of organic phosphorous in the soil, therefore increasing the available inorganic phosphorous for the plant.
- The plants fertilised with developed fertiliser (SEF) extracted more phosphorous from the soil in the majority of cases than the sample treatment.

## Claims

1. A fertiliser **characterised in that** it comprises a mineral, organic or organomineral fertiliser which has integrated in it or is coated by at least one humic-enzymatic complex wherein the enzymes are mainly phosphatases which are substantially immobilised to the humic substances of the complex, wherein the proportion of said complexes in the fertiliser ranges between 0.01 and 5 weight %.

2. A fertiliser in accordance with claim 1, wherein the fertiliser is selected from the group consisting of nitrogenated fertilisers, phosphated fertilisers, NP compound fertilisers, PK compound fertilisers, NK compound fertilisers or NPK compound fertilisers.

3. A fertiliser in accordance with claims 1 or 2, wherein the fertiliser is a chemical nitrogenated fertiliser with a theoretical content of N between 10 and 46%.

4. A fertiliser in accordance with claims 1 or 2, wherein the fertiliser is an NP chemical compound fertiliser with a theoretical content of N between 3 and 30 % and P₂O₅ between 5 and 48 %.

5. A fertiliser in accordance with claims 1 or 2, wherein the fertiliser is an NPK chemical compound fertiliser with a theoretical content of N between 3 and 30 % and P₂O₅ between 5 and 50 % and a theoretical content of K₂O between 5 and 50%.

6. A fertiliser in accordance with claims 1 or 2 wherein the fertiliser is a phosphated chemical fertiliser with a P₂O₅ content between 5 and 48 %.

7. A fertiliser in accordance with claims 1 or 2 wherein the fertiliser is a PK chemical compound fertiliser with a theoretical content of P₂O₅ between 5 and 48 % and K₂O between 5 and 50%.

8. A fertiliser in accordance with claims 1 or 2 wherein the fertiliser is an NK chemical compound fertiliser with a theoretical content of N between 3 and 30 % and K₂O between 5 and 50%.

9. A fertiliser in accordance with any of the previous claims wherein the humic-enzymatic complexes are coating the fertiliser.

10. Manufacturing process of a fertiliser in accordance with any of the previous claims 1 to 9 **characterised in that** a solution of humic-enzymatic complex of phosphates is pulverised over the mineral, organic or organomineral fertiliser at a point between the mixing of raw materials and the end of the manufacturing line.

11. Manufacturing process in accordance with claim 10, wherein the solution of humic-enzymatic complexes of phosphatases is pulverised either prior to the cooler or at the outlet of the same in the covering section.

12. Manufacturing process of a fertiliser in accordance with any one of claims 1 to 8 above wherein the humic-enzymatic complexes are integrated in the fertiliser by incorporating them in the granulation process together with the raw materials of the fertilisers.

## Patentansprüche

1. Düngemittel, **dadurch gekennzeichnet, dass** es ein mineralisches, organisches oder organomineralisches Düngemittel umfasst, das mindestens einen Humin-Enzym-Komplex in sich integriert hat oder mit mindestens einem Humin-Enzym-Komplex beschichtet ist, wobei die Enzyme hauptsächlich Phosphatasen sind, die im Wesentlichen auf den Huminstoffen des Komplexes immobilisiert sind, wobei der Anteil der Komplexe im Düngemittel im Bereich zwischen 0,01 und 5 Gew.-% liegt.

2. Düngemittel nach Anspruch 1, wobei das Düngemittel ausgewählt ist aus der Gruppe bestehend aus stickstoffhaltigen Düngemitteln, phosphatierten Düngemitteln, NP-Mehrnährstoffdüngemitteln, PK-Mehrnährstoffdüngemitteln, NK-Mehrnährstoffdüngemitteln oder NPK-Mehrnährstoffdüngemitteln.

3. Düngemittel nach Anspruch 1 oder 2, wobei das Düngemittel ein chemisches stickstoffhaltiges Düngemittel mit einem theoretischen N-Gehalt ist, der zwischen 10 und 46 % liegt.

4. Düngemittel nach Anspruch 1 oder 2, wobei das Düngemittel ein chemisches NP-Mehrnährstoffdüngemittel mit einem theoretischen N-Gehalt, der zwischen 3 und 30 % liegt und einem theoretischen P₂O₅-Gehalt, der zwischen 5 und 48 % liegt, ist.

5. Düngemittel nach Anspruch 1 oder 2, wobei das Düngemittel ein chemisches NPK-Mehrnährstoffdüngemittel mit einem theoretischen N-Gehalt, der zwischen 3 und 30 % liegt und einem theoretischen P₂O₅-Gehalt, der zwischen 5 und 50 % liegt und einem theoretischen K₂O-Gehalt, der zwischen 5 und 50 % liegt, ist.

6. Düngemittel nach Anspruch 1 oder 2, wobei das Düngemittel ein chemisches phosphatiertes Düngemittel mit einem P₂O₅-Gehalt ist, der zwischen 5 und 48 % liegt.

7. Düngemittel nach Anspruch 1 oder 2, wobei das Düngemittel ein chemisches PK-Mehrnährstoffdüngemittel mit einem theoretischen P₂O₅-Gehalt, der zwischen 5 und 48 % liegt und einem theoretischen K₂O-Gehalt, der zwischen 5 und 50 % liegt, ist.

8. Düngemittel nach Anspruch 1 oder 2, wobei das Düngemittel ein chemisches NK-Mehrnährstoffdüngemittel mit einem theoretischen N-Gehalt, der zwischen 3 und 30 % liegt und einem theoretischen K₂O-Gehalt, der zwischen 5 und 50 % liegt, ist.

9. Düngemittel nach einem der vorstehenden Ansprüche, wobei die Humin-Enzym-Komplexe das Düngemittel beschichten.

10. Herstellungsverfahren eines Düngemittels nach einem der vorstehenden Ansprüche 1 bis 9, **dadurch gekennzeichnet, dass** eine Lösung eines Humin-Enzym-Komplexes aus Phosphaten über dem mineralischen, organischen oder organomineralischen Düngemittel zu einem Zeitpunkt zwischen dem Mischen der Ausgangsstoffe und dem Ende der Herstellungslinie pulverisiert wird.

11. Herstellungsverfahren nach Anspruch 10, wobei die Lösung von Humin-Enzym-Komplexen aus Phosphatasen entweder vor dem Kühler oder am Auslass desselben im Beschichtungsabschnitt pulverisiert wird.

12. Herstellungsverfahren eines Düngemittels nach einem der vorstehenden Ansprüche 1 bis 8, wobei die Humin-Enzym-Komplexe in das Düngemittel integriert werden, indem sie zusammen mit den Ausgangsstoffen des Düngemittels in das Granulationsverfahren aufgenommen werden.

## Revendications

1. Engrais **caractérisé en ce qu'**il comprend un engrais minéral, organique ou organo-minéral qui est intégré dans celui-ci ou est enrobé avec au moins un complexe humique-enzymatique dans lequel les enzymes sont principalement des phosphatases qui sont sensiblement immobilisées sur les substances humiques du complexe, dans lequel la proportion desdits complexes dans l'engrais est située entre 0,01 et 5 % en poids.

2. Engrais selon la revendication 1, dans lequel l'engrais est sélectionné dans le groupe consistant en les engrais azotés, les engrais phosphatés, les engrais à composé NP, les engrais à composé PK, les engrais à composé NK ou les engrais à composé NPK.

3. Engrais selon les revendications 1 ou 2, dans lequel l'engrais est un engrais azoté chimique ayant une teneur théorique en N située entre 10 et 46 %.

4. Engrais selon les revendications 1 ou 2, dans lequel l'engrais est un engrais à composé chimique NP ayant une teneur théorique en N située entre 3 et 30 % et P₂O₅ entre 5 et 48 %.

5. Engrais selon les revendications 1 ou 2, dans lequel l'engrais est un engrais à composé chimique NPK ayant une teneur théorique en N située entre 3 et 30 % et P₂O₅ entre 5 et 50 % et une teneur théorique en K₂O située entre 5 et 50 %.

6. Engrais selon les revendications 1 ou 2 dans lequel l'engrais est un engrais chimique phosphaté ayant une teneur en P₂O₅ située entre 5 et 48 %.

7. Engrais selon les revendications 1 ou 2 dans lequel l'engrais est un engrais à composé chimique PK ayant une teneur théorique en P₂O₅ située entre 5 et 48 % et K₂O entre 5 et 50 %.

8. Engrais selon les revendications 1 ou 2 dans lequel l'engrais est un engrais à composé chimique NK ayant une teneur théorique en N située entre 3 et 30 % et K₂O entre 5 et 50 %.

9. Engrais selon l'une quelconque des revendications précédentes dans lequel les complexes humiques-enzymatiques enrobent l'engrais.

10. Procédé de fabrication d'un engrais selon l'une quelconque des revendications 1 à 9 précédentes **caractérisé en ce qu'**une solution de complexe humique-enzymatique de phosphates est pulvérisée sur l'engrais minéral, organique ou organo-minéral à un moment entre le mélange des matières premières et la fin de la ligne de fabrication.

11. Procédé de fabrication selon la revendication 10, dans lequel la solution de complexes humique-enzymatique de phosphatases est pulvérisée soit avant le refroidisseur, soit à la sortie de celui-ci dans la section de recouvrement.

12. Procédé de fabrication d'un engrais selon l'une quelconque des revendications 1 à 8 ci-dessus dans lequel les complexes humique-enzymatique sont intégrés dans l'engrais en les incorporant au procédé de granulation conjointement avec les matières premières des engrais.
